# EUROPEAN PATENT APPLICATION

(11) **EP 4 510 743 A1**
(43) Date of publication of application: **19.02.2025**
(21) Application number: 22936980.6
(22) Date of filing: 15.04.2022
(51) Int. Cl.: H04W 72/12

(54) **POSITIONING SIGNAL TRANSMISSION METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/087236
(87) International publication number: WO 2023/197335

(57) **Abstract**

The present invention relates to the field of communications, and provides a positioning signal transmission method and apparatus, a device and a readable storage medium. The method comprises: determining an activation on-duration and/or an activation out-of-duration under a discontinuous reception DRX configuration; and transmitting a positioning signal at a time domain resource position corresponding to the activation on-duration and/or the activation out-of-duration under the DRX configuration. According to a difference in the activation on-duration and/or the activation out-of-duration determined by a terminal in a DRX period, the time domain resource position of the positioning signal is selectively determined, the positioning signal is transmitted, and the positioning precision during positioning detection of the terminal is improved.

## Description

### TECHNICAL FIELD

The present disclosure relates to the field of communications, and in particular to a positioning signal transmission method and apparatus, a device and a readable storage medium.

### BACKGROUND

In a wireless communication system, an access network device sends downlink information to a terminal, and the terminal performs a communication process based on the received downlink information.

In related art, in order to reduce power consumption of a terminal, the terminal is usually configured with Discontinuous Reception (DRX) mechanism, so that the terminal can periodically receive, during a wake-up time (On Duration) when the terminal is awakened, downlink information sent by an access network device.

However, when the foregoing method is adopted to receive downlink information, positioning signals in the downlink information will be periodically blocked out. If the On Duration of the terminal is short, the positioning delay of the terminal becomes greater, thereby degrading the positioning accuracy of the terminal.

### SUMMARY

Embodiments of the present disclosure provide a positioning signal transmission method and apparatus, a device and a readable storage medium, which can selectively determine the time domain resource position for the positioning signal, perform transmission of the positioning signal, and improve the positioning accuracy when performing positioning detection on the terminal. The technical solution is as follows.

According to one aspect of the present disclosure, a positioning signal transmission method is provided, the method is performed by a terminal, and the method includes:
determining an active duration and/or an inactive duration of a discontinuous reception (DRX) configuration; and
performing transmission of a positioning signal at a time domain resource position corresponding to the active duration and/or the inactive duration of the DRX configuration.

In another aspect of the present disclosure, a positioning signal transmission method is provided, the method is performed by an access network device, and the method includes:
determining an active duration and/or an inactive duration of a discontinuous reception (DRX); and
performing transmission of a positioning signal at a time domain resource position corresponding to the active duration and/or the inactive duration of the DRX.

In another aspect of the present disclosure, a positioning signal transmission apparatus is provided, the apparatus is applied to a terminal, and the apparatus includes:
a determination module, configured to determine an active duration and/or an inactive duration of a DRX configuration; and
a transmission module, configured to perform transmission of a positioning signal at a time domain resource position corresponding to the active duration and/or the inactive duration of the DRX configuration.

In another aspect of the present disclosure, a positioning signal transmission apparatus is provided, the apparatus is applied to an access network device, and the apparatus includes:
a determination module, configured to determine an active duration and/or an inactive duration of a DRX;
a transmission module, configured to perform transmission of the positioning signal at a time domain resource position corresponding to the active duration and/or the inactive duration of the DRX.

In another aspect of the present disclosure, a terminal is provided, and the terminal includes:
a processor; and a transceiver connected to the processor;
in which the processor is configured to execute executable instructions to implement the positioning signal transmission method according to the above-mentioned embodiment of the present disclosure.

In another aspect of the present disclosure, an access network device is provided, and the network device includes:
a processor; and a transceiver connected to the processor;
in which the processor is configured to execute executable instructions to implement the positioning signal transmission method according to the above-mentioned embodiment of the present disclosure.

In another aspect of the present disclosure, a computer-readable storage medium is provided, the computer-readable storage medium stores at least one instruction, at least one program, code set or instruction set, in which the at least one instruction, at least one program, code set or instruction set, when being executed by a processor, implements the positioning signal transmission method according to the above-mentioned embodiment of the present disclosure.

The beneficial effects brought by the technical solution provided by the embodiments of the present disclosure include at least: according to a difference in the active duration and/or the inactive duration determined for the terminal with a discontinuous reception DRX, the time domain resource position of the positioning signal is selectively determined, so that the transmission of the positioning signal can be performed without receiving other signals, thereby improving the positioning accuracy when performing positioning detection on the terminal.

### BRIEF DESCRIPTION OF THE DRAWINGS

In order to clearly illustrate the technical solution of the embodiments of the disclosure, a brief description of drawings used in the embodiments is given below. Obviously, the drawings in the following descriptions are only part of the embodiments of the disclosure, and for those skilled in the art, other drawings can be obtained according to these drawings without inventive works.
FIG. 1 is a block diagram of an architecture of a communication system according to an embodiment of the present disclosure;
FIG. 2 is a flow chart of a positioning signal transmission method according to an exemplary embodiment of the present disclosure;
FIG. 3 is a flowchart of a positioning signal transmission method according to another exemplary embodiment of the present disclosure;
FIG. 4 is a schematic diagram of a DRX cycle according to an exemplary embodiment of the present disclosure;
FIG. 5 is a schematic diagram of a scenario in which a terminal in a connected state is in a wake-up state and has no scheduling instruction according to an exemplary embodiment of the present disclosure;
FIG. 6 is a schematic diagram of a scenario in which a terminal in a connected state is in a wake-up state and has a scheduling instruction according to an exemplary embodiment of the present disclosure;
FIG. 7 is a schematic diagram of a scenario in which a terminal in a connected state is in a dormant state according to an exemplary embodiment of the present disclosure;
FIG. 8 is a flowchart of a positioning signal transmission method according to an exemplary embodiment of the present disclosure;
FIG. 9 is a schematic diagram of a scenario in which a terminal in a non-connected state monitors PO and has no paging indication according to an exemplary embodiment of the present disclosure;
FIG. 10 is a schematic diagram of a scenario in which a terminal in a non-connected state monitors PO and has a paging indication according to an exemplary embodiment of the present disclosure;
FIG. 11 is a schematic diagram of a scenario in which a terminal in a non-connected state monitors PO according to an exemplary embodiment of the present disclosure;
FIG. 12 is a schematic diagram of a scenario in which a terminal in a non-connected state does not monitor PO according to an exemplary embodiment of the present disclosure;
FIG. 13 is a schematic diagram of a scenario in which a terminal in a non-connected state does not monitor PO according to another exemplary embodiment of the present disclosure;
FIG. 14 is a flowchart of a positioning signal transmission method according to another exemplary embodiment of the present disclosure;
FIG. 15 is a schematic structural diagram of a positioning signal transmission apparatus according to an exemplary embodiment of the present disclosure;
FIG. 16 is a schematic structural diagram of a positioning signal transmission apparatus according to another exemplary embodiment of the present disclosure;
FIG. 17 is a block diagram of a communication device according to an exemplary embodiment of the present disclosure.

### DETAILED DESCRIPTION

In order to make the objectives, technical solutions and advantages of the present disclosure more clear, the embodiments of the present disclosure will be further described in detail below with reference to the accompanying drawings.

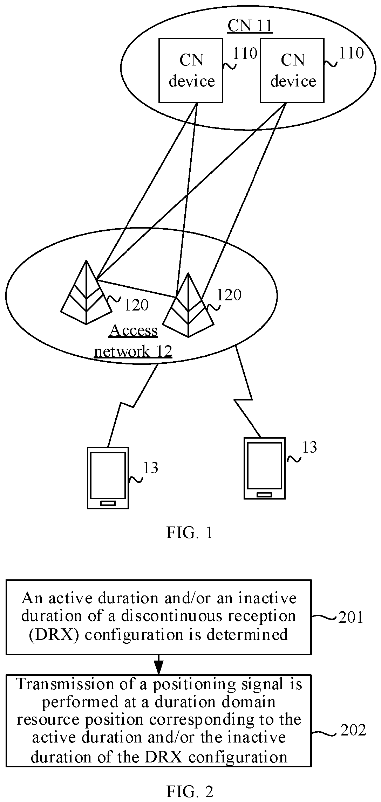

FIG. 1 shows a block diagram of a communication system according to an exemplary embodiment of the present disclosure. The communication system may include: a core network (CN) 11, an access network 12, and a terminal 13.

The core network 11 includes several core network devices 110. The core network devices 110 are devices deployed in the core network. The functions of the core network devices are mainly to provide user connection, user management, and service bearing, and to provide an interface to the external network as a bearer network. For example, the core network devices in the 5G New Radio (NR) system may include an access and mobility management function (AMF) network element, a user plane function (UPF) network element, and a session management function (SMF) network element. For example, the core network devices 30 in the embodiment of the present application may include a location management function network element. Optionally, the location management function network element includes a location server, which may be implemented as any one of the following: Location Management Function (LMF), Enhanced Serving Mobile Location Centre (E-SMLC), Secure User Plane Location (SUPL), and Secure User Plane Location Platform (SUPL SLP).

The access network 12 includes several access network devices 120. The access network device 120 may be a base station. The base station is an apparatus deployed in the access network to provide wireless communication functions for terminals. The base station may include various forms of macro base stations, micro base stations, relay stations, access points or transmission reception points (TRPs), etc. In systems using different radio access technologies, names of devices having functions of a base station may be different. For example, in the Long Term Evolution (LTE) system, it is called eNodeB or eNB; in the 5G New Radio (NR) system, it is called gNode B or gNB. With the evolution of communication technology, the term "base station" may change. For ease of description, in the embodiments of the present disclosure, the above-mentioned apparatuses that provide wireless communication functions for terminals are collectively referred to as access network devices.

The terminal 13 may include various handheld devices, vehicle-mounted devices, wearable devices, computing devices that have wireless communication functions or other processing devices connected to a wireless modem, as well as various forms of user equipment (UE), mobile stations (MSs), terminal devices, etc. For ease of description, the above-mentioned devices are collectively referred to as terminals. The access network device 120 and the terminal 13 communicate with each other via certain air interface technology, such as Uu interface. 5G-based industrial sensors, video surveillance and wearable devices do not need to support such a large bandwidth. This is especially true for industrial sensors, which only require a transmission bandwidth of a few megabytes. This type of terminals may be classified as a new terminal type in the subsequent enhanced 5G versions, and undergo corresponding technical feature improvements.

Optionally, in the process of wireless communication between the terminal 13 and the access network device 120, the wireless communication may be performed in a licensed frequency band or in an unlicensed frequency band.

The main purpose of configuring the discontinuous reception (DRX) mechanism for a terminal is to save energy, that is, to reduce the power consumption of the terminal. Illustratively, when the terminal and the access network device are in a connected state (RRC_Connected), the DRX configured for the terminal includes at least one of the following:
(1) drx-On DurationTimer: the duration at the beginning of a DRX cycle;
   that is, in the DRX configuration, the shortest duration in which the terminal is in the wake-up state at the beginning of the DRX cycle, which can also be called on duration or wake-up time;
(2) drx-Slot Offset: the delay before starting the drx-On Duration Timer;
   that is, in the DRX configuration, the DRX cycle and the slot offset value of On Duration;
(3) drx-Inactivity Timer: the duration after the PDCCH occasion in which a PDCCH indicates a new UL or DL transmission for the MAC entity;
   that is, in the DRX configuration, a time duration in which the terminal needs to remain active upon the terminal receives a downlink instruction or uplink instruction that schedules the terminal in the On Duration;
(4) drx-Retransmission Timer DL (per DL HARQ process except for the broadcast process): the maximum duration until a DL retransmission is received;
   that is, in the DRX configuration, the maximum duration before receiving one downlink retransmission instruction in each hybrid automatic repeat request except for the broadcast process (drx-Retransmission Timer DL);
(5) drx-Retransmission Timer UL (per UL HARQ process): the maximum duration until a grant for UL retransmission is received;
that is, in the DRX configuration, the maximum duration before an uplink retransmission grant is received in each hybrid automatic repeat request (drx-Retransmission Timer UL).

In some embodiments, the three parameters of drx-Slot Offset, drx-On Duration Timer and drx-Inactivity Timer are used as examples for explanation. The basic principle of DRX is that the terminal only needs to wake up periodically within the On Duration and receive the downlink signal/channel sent by an access network device. If downlink control information (DCI) scheduling the downlink (DL) or uplink (UL) of the terminal itself is not detected within the On Duration, then after the On Duration ends, the terminal may no longer need to receive the downlink signal/channel sent by the access network device until the On Duration of the next cycle. If the terminal detects the DCI scheduling the DL or UL of the terminal within the On Duration, the drx-Inactivity Timer is started, that is, the terminal needs to continue to receive the downlink signal/channel for at least the duration of the Inactivity Timer.

In some embodiments, Active duration is used for indicating the time when the terminal needs to wake up. In the DRX configuration, the time when the terminal wakes up in the serving cells in the DRX cycle includes at least one of the following.
(1) drx-On Duration Timer or drx-Inactivity Timer configured for the DRX group is running;
   that is, in the DRX configuration, the running time of the On Duration Timer or the Inactivity Timer;
(2) drx-Retransmission Timer DL or drx-Retransmission Timer UL is running on any Serving Cell in the DRX group;
   that is, in the DRX configuration, the running time of the Retransmission Timer DL or the Retransmission Timer UL in any serving cell;
(3) ra-Contention Resolution Timer or msgB-Response Window is running;
   that is, the running time of the contention resolution timer or the response window of msgB;
(4) a Scheduling Request is sent on PUCCH and is pending;
   that is, when a scheduling request is sent on the physical uplink control channel or is in a pending state;
(5) a PDCCH indicating a new transmission addressed to the C-RNTI of the MAC entity has not been received after successful reception of a Random Access Response for the Random Access Preamble not selected by the MAC entity among the contention-based Random Access Preamble;
that is, a time resource, which is after the terminal successfully receives a random access response for a first random access preamble and at which the terminal has not received a medium access control (MAC) entity indicated by a PDCCH for indicating a C-RNTI, is determined as an active duration, in which the first Random Access Preamble is not selected by the media access control control element (MAC CE) from contention-based random access preambles.

In some optional embodiments, the terminal and the access network device are in a non-connected state, and the non-connected state includes: the terminal being in a radio resource control connection failure (RRC_ Inactive) or idle (RRC_ IDLE) state; and the configured DRX is associated with a paging occasion (PO), and includes at least one of the following parameters. The following parameters are used for calculating paging frames (PFs) and the number of PFs.

T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).

That is, T is the DRX cycle corresponding to the terminal. Where T is determined by the minimum value of the terminal-specific DRX values (if configured by RRC and/or upper layers) and the default DRX value broadcast in the system information. When the terminal is in the non-connected state, if terminal-specific DRX is not configured by RRC and/or upper layers, the default DRX value is used.

N: number of total paging frames in T; that is, the total number of paging frames in T.

Ns: number of paging occasions for a PF; that is, the number of paging occasions for a PF.

PF_offset: offset used for PF determination; that is, the time domain offset of PF.

UE_ID: Mobile user identification code (e.g. 5G-S-TMSI mod 1024).

Illustratively, based on the DRX cycle T, the time domain offset of the PF and the number of PFs in the above parameters, it is possible to know the time domain range in which the terminal needs to monitor paging within a DRX cycle.

In some optional embodiments, whether with the DRX configuration for the RRC connected state (CONNECTED state) or with the DRX configuration for the RRC non-connected state (Inactive or IDLE state), the terminal needs to periodically receive the downlink signal/channel sent by the access network device, that is, on the periodic On durations or POs. Subsequently, in order to save power, a new DCI signaling is defined for the terminal in the connected state, and the DCI signaling can indicate that there is no need to receive, on at least one subsequent On Duration, the downlink signal/channel sent by the access network device; for the terminal in the non-connected state, another DCI is defined, and the DCI signaling can indicate the subsequent PO on which the paging sent by the base station needs to be received, and if no PO is indicated, the terminal does not need to receive the Paging sent by the base station.

According to the discontinuous reception (DRX) configuration, the terminal periodically receives, within the On Duration, a downlink signal or a downlink channel sent by the access network device.

In the connected state, the terminal needs to perform scheduling detection according to the drx-On Duration Timer.

For the CONNECTED state, the access network device sends indication information to the terminal. When the indication information indicates that the terminal is in the wake-up state in the duration of the first drx-On Duration Timer, the terminal needs to wake up in the On Duration to monitor the downlink channel/signal from the access network device, and determine whether the scheduled download signal (DL), upload signal (UL) or downlink control information (DCI) is detected within the On Duration. When the indication information indicates that the terminal is not in the wake-up state in the duration of the second drx-On Duration Timer within one DRX cycle, the terminal does not need to wake up in the On Duration.

In the idle state, the terminal needs to wake up and perform paging detection according to the periodicity of paging occasion.

For IDLE/INACTIVE state, the access network device searches for the terminal via Paging Occasion. When the access network device has downlink data or signaling to be sent, it sends a paging message to cause the terminal to initiate a Radio Resource Control (RRC) connection establishment or connection recovery procedure to return to the RRC connected state. In addition, the access network device can also notify all terminals in whatever state in the network coverage to receive system message updates and notify the terminals of other warning information by sending paging short messages.

For the paging mechanism, the terminal in the IDLE/INACTIVE state uses DRX to monitor paging, and monitors paging on the PO in each DRX cycle. The PO includes one or more monitoring occasions of the physical downlink control channel (PDCCH), which may contain one or more slots or symbols. All these PDCCH monitoring occasions can be used for sending paging control messages (Paging DCI), where the Paging DCI is used for instructing the terminal to decode the corresponding physical downlink shared channel (PDSCH) to obtain the Paging Message.

In a multi-beam scenario, Paging DCI needs to be repeatedly sent on multiple PDCCH monitoring occasions of the same PO. It can be understood that each PDCCH Monitoring Occasion corresponds to one of the transmission beams. The terminal selects one of the beams that is receivable to receive Paging DCI based on its own implementation or the method specified by the protocol.

For the IDLE/INACTIVE state, the access network device sends indication information to the terminal. When the indication information indicates that the terminal is in the wake-up state on the first PO, the terminal needs to wake up in the On Duration to monitor the paging from the access network device; when the indication information indicates that the terminal is not in the wake-up state on the second PO within a DRX cycle, the terminal does not need to wake up on the PO.

Illustratively, please refer to FIG. 2, which is a flowchart of a positioning signal transmission method according to an exemplary embodiment of the present disclosure. The method is described by taking the application of the method to a terminal as an example. As shown in FIG. 2, the method includes the following steps 201 to 202.

Step 201: An active duration and/or an inactive duration of a discontinuous reception (DRX) configuration is determined.

In some embodiments, the active duration is used for indicating the time range in which the terminal is active; the inactive duration is used for indicating the time range in which the terminal is not active. Determining the active duration and/or the inactive duration includes at least one of the following situations. It should be noted that the term "of DRX" in the expression "the active duration and/or the inactive duration of DRX" encompasses the meaning of "of the terminal with the DRX configuration", which can be abbreviated as "of DRX".

(1) Determining the active duration of DRX; (2) determining the inactive duration of DRX; (3) determining the active duration of DRX and the inactive duration of DRX.

The access network device sends the indication information to the terminal, and the terminal receives the indication information sent by the access network device. Optionally, the indication message includes an information field indicating the wake-up state of the terminal in discontinuous reception (DRX) or the wake-up state of the terminal on PO.

Illustratively, the implementation of discontinuous reception (DRX) in connected state is different from the implementation of DRX in non-connected state. The connected state indicates that the terminal has established an RRC connection with the access network device; the non-connected state (idle state) indicates that the terminal has not established an RRC connection with the access network device, or the terminal has established an RRC connection with the access network device before and then released the RRC connection.

In an optional embodiment, illustratively, the indication information received by the terminal varies depending on the connection state between the terminal and the access network device.

Optionally, in response to the terminal and the access network device being in a connected state, first indication information is received, in which the first indication information includes a first information field. In some embodiments, the first indication information is implemented as downlink control information (DCI).

Illustratively, the first indication information includes multiple information fields, including a first information field for indicating the wake-up state of the terminal in the On Duration of DRX when the terminal is in a connected state with the access network device. Optionally, the wake-up state is used for indicating whether the terminal is awakened in the On Duration. In this embodiment, the active duration and/or the inactive duration of DRX is determined according to the wake-up state of the terminal in the On Duration of the DRX configuration.

In an optional embodiment, the active duration and/or the inactive duration of the terminal with the DRX configuration is determined based on a first information field.

Illustratively, the first information field is used for indicating that the terminal is in a wake-up state in a duration of a first drx-on Duration Timer of a first DRX cycle; and/or, the first information field is used for indicating that the terminal is not in a wake-up state in a duration of a second drx-on Duration Timer of a second DRX cycle.

Optionally, in response to the terminal and the access network device being in a non-connected state, second indication information is received, in which the second indication information includes a second information field. In some embodiments, the second indication information is implemented as downlink control information (DCI).

Illustratively, the second indication information includes one or more information fields, including a second information field for indicating the wake-up state of the terminal of the DRX on one or more POs when the terminal is in a non-connected state with the access network device. Optionally, the wake-up state is used for indicating whether the terminal is awakened at the time corresponding to the PO. In this embodiment, the active duration and/or the inactive duration of DRX is determined according to the wake-up state of the terminal on one or more POs in the DRX configuration.

In an optional embodiment, the active duration and/or the inactive duration of the terminal with the DRX configuration is determined based on a second information field.

Illustratively, the second information field is used for indicating that the terminal is in a wake-up state on the first PO in the third DRX cycle; and/or, the second information field is used for indicating that the terminal is not in a wake-up state on the second PO in the fourth DRX cycle.

It is worth noting that the above are merely illustrative examples and are not limitative in embodiments of the present application.

Step 202: Transmission of a positioning signal is performed at a time domain resource position corresponding to the active duration and/or the inactive duration of the DRX configuration.

Illustratively, in a conventional manner, the terminal performs transmission of the positioning signal only within the active duration of the DRX configuration, and does not perform transmission of the positioning signal outside the active duration of the DRX configuration. However, if the terminal does not receive the positioning signal outside the active duration for a long time, a large positioning delay and poor positioning accuracy tend to occur.

Optionally, the positioning signal includes at least one of a positioning reference signal (PRS) and a sounding reference signal (SRS).

Illustratively, in addition to the PRS and SRS mentioned above, the positioning signal also includes a phase tracking reference signal (PTRS), a demodulation reference signal (DMRS), a channel state information reference signal (CSI-RS) or other newly defined signals used for positioning, which are not limited in the embodiments of the present application.

In some optional embodiments, the transmission of the positioning signal includes at least one of sending the positioning signal and receiving the positioning signal.

Illustratively, sending a positioning signal is used to indicate: the terminal sends a positioning signal at a determined time domain resource position. For example: the terminal sends an SRS at a determined time domain resource position. Receiving a positioning signal is used to indicate: the terminal receives a positioning signal sent by an access network device at a determined time domain resource position.

Optionally, after receiving the positioning signal, the method further includes sending a positioning report. That is, after the terminal receives the positioning signal, performs positioning measurement on the positioning signal and generates a positioning report, the terminal sends the positioning report to a core network device.

In some optional embodiments, when the terminal sends a positioning signal, the access network device performs positioning measurement on the received positioning signal and then sends a positioning report to a core network device.

It is worth noting that the above are merely illustrative examples and are not limitative in the embodiments of the present application.

In summary, according to the difference in the determined active duration and/or inactive duration of the terminal with the discontinuous reception (DRX), the time domain resource position for the positioning signal is selectively determined, the positioning signal is transmitted, and the positioning accuracy of the terminal during positioning detection is improved.

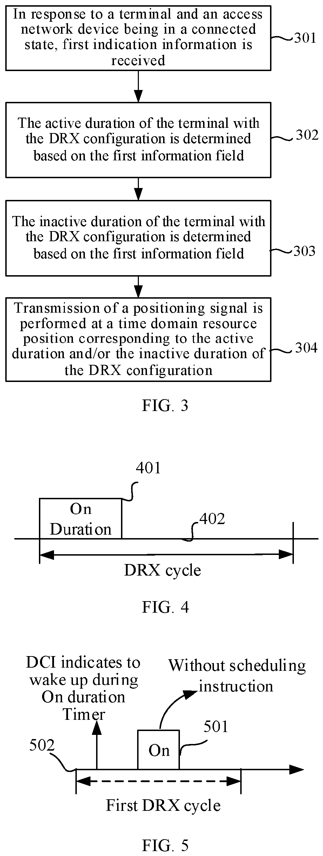

In some optional embodiments, when the terminal is in a connected state with the access network device, the active duration and the inactive duration are determined based on the drx-on Duration Timer of the terminal in the DRX cycle. Illustratively, as shown in FIG. 3, the above steps 201 to 202 can also be implemented as the following steps 301 to 304.

Step 301: In response to a terminal and an access network device being in a connected state, first indication information is received.

The first indication information includes a first information field for indicating the wake-up state of the terminal in the On Duration of the DRX configuration. Illustratively, the first information field in the first indication information is used for indicating the wake-up state of the terminal in the On Duration of DRX when the terminal is in a connected state with the access network device.

Optionally, the wake-up state is used for indicating the wake-up situation of the terminal, and the active duration and/or the inactive duration of the terminal with the DRX configuration is determined according to the wake-up state. The active duration indicates that the terminal is in the wake-up state.

Step 302: The active duration of the terminal with the DRX configuration is determined based on the first information field.

The first information field is used for indicating that the terminal is in a wake-up state in a duration of a first drx-on Duration Timer of a first DRX cycle; and/or, the first information field is used for indicating that the terminal is not in a wake-up state in a duration of a second drx-on Duration Timer of a second DRX cycle.

Illustratively, in the DRX working mode, in the connected state, the terminal cannot turn off the receiver all the time, but needs to turn on the receiver periodically and continuously monitor the incoming signaling for a period of time after the start. The above period is called On Duration, that is, the terminal needs to wake up and monitor the channel/signal from the access network device during the On Duration. The On Duration is controlled by the timer On Duration Timer. Optionally, the length of the On Duration can be configured by parameters.

The DRX cycle is used to describe the interval between two On Durations in the DRX state, and each DRX cycle consists of one On Duration and one possible dormant period. Illustratively, FIG. 4 is a schematic diagram of one DRX cycle, in which the duration 401 is the time duration corresponding to the On Duration; the duration 402 is the time duration in the DRX cycle excluding the On Duration.

Optionally, On Duration is a predetermined time domain range. Illustratively, the terminal determines whether to turn on the On Duration Timer according to the indication information sent by the access network device. For example: when the first indication field received by the terminal instructs the terminal to turn on the On Duration Timer, the terminal turns on the On Duration Timer at the initial moment of the On Duration, controls the duration of the On Duration, and turns off the On Duration Timer at the end moment of the On Duration.

Illustratively, FIG. 5 is a schematic diagram of a scenario in which the first drx-on Duration Timer in the first DRX cycle is in a wake-up state. The terminal receives the first indication information sent by the access network device, and the first indication field in the first indication information indicates that the terminal is in a wake-up state in duration of the first drx-on Duration Timer of the first DRX cycle, then the terminal turns on the On Duration Timer. The On area 501 is used for indicating the On Duration. Based on the definition of the On Duration, each DRX cycle corresponds to one On Duration. The start time 502 of the first DRX cycle corresponds to the moment when the On Duration Timer is turned on. Within the On Duration, the terminal receives the channel/signal sent by the access network device.

Illustratively, the terminal receives first indication information sent by the access network device, and the first indication field in the first indication information indicates that the terminal is not in the wake-up state in the duration of the second drx-on Duration Timer of the second DRX cycle, and therefore the On Duration Timer is not turned on.

Optionally, the active duration of the terminal with the DRX configuration is determined according to the turned-on state of the first drx-on Duration Timer. For example: the time resource in the first drx-on Duration Timer is determined as the active duration.

The method for determining the active duration will be described in detail in subsequent embodiments and will not be repeated here.

Step 303: The inactive duration of the terminal with the DRX configuration is determined based on the first information field.

Illustratively, the inactive duration represents time other than the active duration, that is, within a time domain range, the range except the active duration is determined as the inactive duration.

Optionally, after determining the active duration, a time resource other than the active duration is regarded as the inactive duration; or, based on the wake-up state of the terminal with the DRX configuration that is indicated by the first information field, part of the time resource is selected as the inactive duration.

Optionally, the inactive duration of the terminal with the DRX configuration is determined according to the second drx-on Duration Timer, for example: determining the time resource in the second drx-on Duration Timer as the inactive duration.

The method for determining the inactive duration is described in detail in the subsequent embodiments and will not be repeated here.

Step 304: Transmission of a positioning signal is performed at a time domain resource position corresponding to the active duration and/or the inactive duration of the DRX configuration.

In some embodiments, transmission of the positioning signal is performed at a time domain resource position corresponding to the active duration.

In some embodiments, transmission of the positioning signal is performed at a time domain resource location corresponding to the inactive duration.

In some embodiments, transmission of the positioning signal is performed at a time domain resource position corresponding to the active duration and a time domain resource position corresponding to the inactive duration.

In summary, according to the difference in the determined active duration and/or inactive duration of the terminal with the DRX, the time domain resource position of the positioning signal is selectively determined, transmission of the positioning signal is performed, and the positioning accuracy of the terminal during positioning detection is improved.

In the embodiment of the present application, the case where the terminal and the access network device are in a connected state is described. When the terminal and the access network device are in a connected state, the access network device sends first indication information including a first information field to the terminal, and the terminal determines the active duration and/or the inactive duration according to the first information field which indicates that the terminal is in a wake-up state in the duration of the first drx-on Duration Timer of the first DRX cycle and/or the terminal is not in a wake-up state in the duration of the second drx-on Duration Timer of the second DRX cycle, and the terminal can perform transmission of the positioning signal in the active duration and/or the inactive duration. The situation that the terminal can only receive the positioning signal in the active duration is avoided. On the basis of maintaining the positioning signal transmission advantage corresponding to DRX, the wake-up time information associated with the connected state is used to flexibly determine the active duration and/or the inactive duration, thereby reducing the delay of the positioning signal and improving the positioning accuracy.

In an optional embodiment, when the terminal and the access network device are in a connected state, a process of determining the active duration and the inactive duration is as follows.

### (I) In the connected state, the active duration is determined.

1.1 A time resource within the first drx-on Duration Timer is determined as the active duration.

Illustratively, as shown in FIG. 5, in the first DRX cycle, the first indication field (D CI) indicates that the terminal is in a wake-up state in the duration of a first drx-on Duration Timer of a first DRX cycle, that is, in the first DRX cycle, the terminal turns on the On Duration Timer and determines the time resource On Duration controlled by the On Duration Timer, that is, determines the time resource corresponding to the On area 501 in FIG. 5.

In some embodiments, the terminal does not receive a scheduling instruction within the duration corresponding to the On Duration, that is, the terminal does not receive a downlink instruction or an uplink instruction scheduling the terminal within the On Duration. For example: the terminal does not receive a scheduling instruction within the time resource corresponding to the On area 501 in FIG. 5.

Optionally, the time resource On Duration in the first drx-on Duration Timer is taken as an instance of the active duration, that is, the time domain range corresponding to the On area 501 in FIG. 5 is taken as an instance of the active duration.

1.2 A time resource within a drx-Inactivity Timer of the first DRX cycle is determined as the active duration.

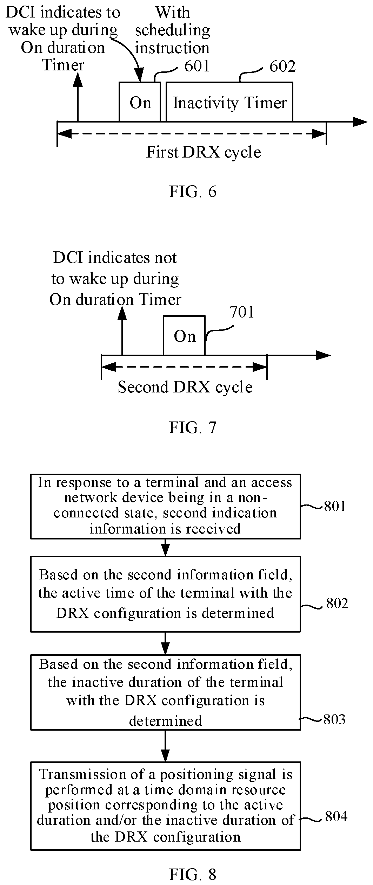

Illustratively, as shown in FIG. 6, in the first DRX cycle, based on the indication by the first indication field (DCI) that the terminal is in a wake-up state in the first drx-on Duration Timer, that is, in the first DRX cycle, the terminal starts the On Duration Timer and determines the time resource On Duration controlled by the On Duration Timer, that is, determines the time resource corresponding to the On area 601 in FIG. 6.

In some embodiments, within the duration corresponding to the On Duration, the terminal receives a scheduling instruction, that is, the terminal receives a downlink instruction or an uplink instruction scheduling itself (the terminal) within the On Duration. For example: within the time range corresponding to the On area 601 in FIG. 6, the terminal receives a scheduling instruction.

Illustratively, after the terminal receives the scheduling instruction, the inactivity timer (drx-Inactivity Timer) configured for the first DRX cycle is started, thereby the terminal determines, via the drx-Inactivity Timer, the time duration in which the terminal needs to remain active after receiving, within the On Duration, the downlink instruction or uplink instruction scheduling itself (the terminal).

Illustratively, as shown in FIG. 6, within the time range corresponding to the On area 601, the terminal receives the scheduling instruction and starts the drx-Inactivity Timer, thereby determining the time duration in which the terminal needs to continue to be active after receiving the PDCCH, that is, the time duration in which the terminal needs to continue to be active is determined via the Inactivity Timer 602 as shown in FIG. 6. Illustratively, the determined time duration in which the terminal needs to remain active includes the time resource in the drx-Inactivity Timer.

Optionally, the time resource in the drx-Inactivity Timer is determined as an instance of the active duration; or the time resource corresponding to the period from the start of the drx-on Duration Timer to the stop of the drx-Inactivity Timer is determined as an instance of the active duration, that is, the time resource corresponding to the Inactivity Timer 602 in FIG. 6 is determined as an instance of the active duration; and/or the time resource corresponding to the area 601 and the time resource corresponding to the Inactivity Timer 602 are determined as an instance of the active duration. The time resource corresponding to the drx-on Duration Timer and the time resource corresponding to the drx-Inactivity Timer may overlap or may not overlap.

1.3 The time resource in the downlink retransmission timer (drx-Retransmission Timer DL) or the uplink retransmission timer (drx-Retransmission Timer UL) is determined as the active duration.

Optionally, the retransmission instruction received by the terminal includes a downlink retransmission instruction for monitoring a downlink retransmission time resource; or, the retransmission instruction received by the terminal includes an uplink retransmission instruction for monitoring an uplink retransmission time resource; or, the retransmission instruction received by the terminal includes a downlink retransmission instruction for monitoring a downlink retransmission time resource and an uplink retransmission instruction for monitoring an uplink retransmission time resource.

Illustratively, when the terminal receives a downlink retransmission instruction, the terminal controls to start a drx-Retransmission Timer DL and monitors the time domain resource position corresponding to the downlink retransmission time resource; or, when the terminal receives an uplink retransmission instruction, the terminal controls to start a drx-Retransmission Timer UL and monitors the time domain resource position corresponding to the uplink retransmission time resource; or, when the terminal receives a downlink retransmission instruction and an uplink retransmission instruction, the terminal controls to start a drx-Retransmission Timer DL and a drx-Retransmission Timer UL, and monitors the time domain resource position corresponding to the downlink retransmission time resource via the drx-Retransmission Timer DL, and monitors the time domain resource position corresponding to the uplink retransmission time resource via the drx-Retransmission Timer UL.

Optionally, the retransmission time resource is determined as the active duration. For example: when the terminal receives a downlink retransmission instruction, the time domain resource position corresponding to the downlink retransmission time resource is regarded as the active duration; or, when the terminal receives an uplink retransmission instruction, the time domain resource position corresponding to the uplink retransmission time resource is regarded as the active duration; or, when the terminal receives a downlink retransmission instruction and an uplink retransmission instruction, the time domain resource position corresponding to the downlink retransmission time resource and the time domain resource position corresponding to the uplink retransmission time resource are regarded as the active duration. That is, the retransmission time resource is determined as an instance of the active duration.

1.4 The time resource corresponding to a contention resolution timer (ra-Contention Resolution Timer) or a MsgB response window (MsgB-Response Window) is determined as the active duration.

Optionally, after the terminal completes the sending of the message 3 (MSG3) to the access network device, the terminal starts a contention resolution timer to monitor message 4 (M SG4). Illustratively, the duration for monitoring MSG4 in response to starting the contention resolution timer is regarded as the time resource corresponding to the contention resolution timer.

Optionally, the time resource for monitoring MSG4 in response to starting the contention resolution timer is determined as the active duration. For example, when the terminal receives a downlink retransmission instruction, the time resource corresponding to the downlink retransmission time domain resource is determined as the active duration; or, when the terminal receives an uplink retransmission instruction, the time resource corresponding to the uplink retransmission is determined as the active duration; or, when the terminal receives a downlink retransmission instruction and an uplink retransmission instruction, the time resource corresponding to the downlink retransmission and the time resource corresponding to the uplink retransmission are determined as the active duration, that is, the time resource corresponding to the contention resolution timer is determined as an instance of the active duration.

Illustratively, after receiving Msg B, the terminal determines a response window corresponding to Msg B, and determines a time resource corresponding to the response window of Msg B.

Optionally, Msg B includes a Msg B physical downlink control channel (PDCCH) and a Msg B physical downlink shared channel (PDSCH). That is, after receiving Msg B, the terminal determines a window corresponding to Msg B PDCCH and a window corresponding to Msg B PDSCH.

In some embodiments, the time resource corresponding to the response window of Msg B is determined as the active duration, that is, the time resource corresponding to the response window of Msg B is determined as an instance of the active duration.

1.5 The time resource on which a Scheduling Request is sent on the physical uplink control channel (PUCCH) and is in a pending state is determined as the active duration.

Illustratively, when the terminal has uplink data to send but has no uplink resource, the terminal sends a scheduling request (SR) to the access network device via the physical uplink control channel. That is, at this time, the scheduling request has been sent by the terminal, but the terminal has not received a scheduling indication, so the scheduling request is in a pending state.

Optionally, after the terminal has sent a scheduling request to the access network device on the physical uplink control channel but the scheduling request is in a pending state, the terminal determines a time resource on which the scheduling request is sent on the physical uplink control channel but is in a pending state, and determines the time resource as the active duration. That is, the time resource on which the scheduling request is sent on the PUCCH and is in a pending state is determined as an instance of the active duration.

1.6 A PDCCH indicating a new transmission addressed to the C-RNTI of the MAC entity has not been received after successful reception of a Random Access Response for the Random Access Preamble not selected by the MAC entity among the contention-based Random Access Preamble.

The Random Access Response is an access response to the first Random Access Preamble, and the first Random Access Preamble is not selected by the MAC CE from contention-based random access preambles.

Illustratively, due to the mobility of the terminal, the distance between the terminal and the access network device is uncertain. If the terminal needs to send a message to the access network device, it is necessary to maintain and manage the uplink synchronization in real time. The uplink synchronization process is implemented via the physical random access channel (PRACH). PRACH is used for the transmission of the random access preamble (RAP). The terminal transmits RAP on PRACH to establish a synchronization relationship with the access network device, and then can request the access network device to allocate a dedicated resource to the terminal for data transmission.

The contention-based random access preamble is used for indicating the random access preamble transmitted in the contention-based random access procedure. In New Radio (NR), one random access occasion (RACH Occasion, RO) includes 64 RAPs. In the contention-based random access procedure, one SSB index in the transmission window of a synchronization signal and PBCH block (SSB) can correspond to one or more ROs, and multiple SSB indexes can also correspond to part of the preamble in one RO.

Illustratively, after the terminal successfully receives a random access response to the first Random Access Preamble, it determines the time resource on which the media access control (MAC) entity, that indicates the C-RNTI and is indicated by the PDCCH, has not been received, and determines the time resource as the active duration, in which the first Random Access Preamble is not selected by the MAC CE from contention-based random access preambles. That is, the time resource on which the media access control (MAC) entity, that indicates the C-RNTI and is indicated by the PDCCH, has not been received is determined as an instance of the active duration.

### (II) In the connected state, the inactive duration is determined.

2.1 The time resource in the second drx-on Duration Timer is determined as the inactive duration.

Illustratively, as shown in FIG. 7, in the second DRX cycle, the first indication field (DCI) indicates that the terminal is not in the wake-up state in the duration of the second drx-on Duration Timer of the second DRX cycle, that is, in the second DRX cycle, the terminal is in the non-wake-up state (dormant state).

Optionally, the On area 701 corresponding to the On Duration is a predetermined time domain range, which is a time resource within the second drx-on Duration Timer. Optionally, the time resource within the second drx-on Duration Timer is determined as the inactive duration. That is, the time resource within the second drx-on Duration Timer of the second DRX cycle is determined as an instance of the inactive duration.

2.2 After determining the active duration, the time resource other than the active duration is determined as the inactive duration.

Illustratively, as shown in FIG. 5, in the first DRX cycle, if the time resource corresponding to the On area 501 is determined as the active duration, then the time range corresponding to the area of the first DRX cycle other than the On area 501 is determined as the time range corresponding to the inactive duration.

Alternatively, as shown in FIG. 6, in the first DRX cycle, if it is determined that the active duration is the time range corresponding to the On area 601 and the time range corresponding to the Inactivity Timer 602, then the time domain range in the first DRX cycle other than the time range corresponding to the On area 601 and other than the time range corresponding to the Inactivity Timer 602 is determined as the time range corresponding to the inactive duration.

In the embodiments of the present application, the determination of the active duration and the inactive duration according to the wake-up situation of the terminal in the duration of the drx-on Duration Timer of the DRX cycle indicated by the first information field under the condition that the terminal and the access network device are in a connected state is described. When determining the active duration via the drx-on Duration Timer, not only the On Duration of the terminal in the wake-up state is considered, but also the scheduling instruction that the terminal may receive in the On Duration is considered, and the active duration is determined accordingly; in addition, the Retransmission instruction, the monitoring by means of the ra-Contention Resolution Timer, the MsgB-Response Window and other operating conditions may also have an impact on the active duration. When determining the inactive duration via the On Duration, not only the On Duration of drx-on Duration Timer of the terminal not in the wake-up state can be determined as the inactive duration, but also after determining the active duration, the time range in the DRX cycle other than the active duration can be determined as the time range corresponding to the inactive duration, so as to more comprehensively determine the active duration and/or the inactive duration.

In some optional embodiments, when the terminal is in a non-connected state with the access network device, the active duration and the inactive duration are determined according to the PO of the terminal in the DRX cycle. Illustratively, as shown in FIG. 8, the above steps 201 to 202 can also be implemented as the following steps 801 to 804.

Step 801: In response to a terminal and an access network device being in a non-connected state, second indication information is received.

The second indication information includes a second information field for indicating the wake-up state of the terminal with the DRX configuration on the PO. The wake-up state can also be understood as a state for monitoring PO.

Illustratively, the second indication information includes a plurality of information fields, and different information fields indicate different states of the terminal. For example, the second information field in the second indication information is used for indicating the wake-up state of the terminal on the PO in the discontinuous reception (DRX) cycle when the terminal and the access network device are in a non-connected state. Optionally, the wake-up state is used for indicating whether the terminal is awakened.

Step 802: Based on the second information field, the active duration of the terminal with the DRX configuration is determined.

The second information field is used for indicating that the terminal is in a wake-up state on a first PO in a third DRX cycle; and/or the second information field is used for indicating that the terminal is not in a wake-up state on the second PO in a fourth DRX cycle.

In some embodiments, when the terminal is in a non-connected state, it is necessary to monitor paging sent by the access network device. When the terminal uses the DRX mechanism, the terminal needs to monitor one PO or multiple POs in each DRX cycle.

Optionally, the monitored paging occasion includes POs that the terminal needs to monitor during the DRX cycle, and these POs are called monitored paging occasions. The second indication information is used for indicating the monitoring situation, and the monitoring situation includes which POs need to be monitored and/or which POs do not need to be monitored, that is, the monitoring situation includes: the access network device instructs the terminal to monitor the first PO, and/or the access network device instructs the terminal not to monitor the second PO.

Illustratively, the terminal receives second indication information sent by the access network device, and the second information field in the second indication information indicates that the terminal monitors the first PO in the third DRX cycle, then the terminal is in the wake-up state on the first PO.

Illustratively, the terminal receives the second indication information sent by the access network device, and the second information field in the second indication information indicates that the terminal does not monitor the second PO in the fourth DRX cycle, then the terminal is not in a wake-up state on the second PO. In an optional embodiment, after the terminal receives the second information field, the active duration of the terminal with the DRX configuration is determined according to the wake-up state on the PO indicated by the second information field.

Illustratively, when the second information field indicates that the terminal is in a wake-up state on the first PO in the third DRX cycle, the time resource corresponding to the first PO is determined as the active duration; or, the random access time resource corresponding to the first PO is determined as the active duration. The determination method of the active duration is described in detail in subsequent embodiments and will not be repeated here.

Step 803: Based on the second information field, the inactive duration of the terminal with the DRX configuration is determined.

Optionally, a time resource of the terminal other than the active duration of the DRX configuration is determined as time resource corresponding to the inactive duration.

Optionally, the determination method of the inactive duration is described in detail in subsequent embodiments and will not be repeated here.

Step 804: Transmission of a positioning signal is performed at a time domain resource position corresponding to the active duration and/or the inactive duration of the DRX configuration.

In some embodiments, transmission of the positioning signal is performed at a time domain resource position corresponding to the active duration.

In some embodiments, transmission of the positioning signal is performed at a time domain resource location corresponding to the inactive duration.

In some embodiments, transmission of the positioning signal is performed at a time domain resource position corresponding to the active duration and a time domain resource position corresponding to the inactive duration.

In summary, according to the difference in the determined active duration and/or inactive duration of the terminal with the DRX, the time domain resource position of the positioning signal is selectively determined, so as to perform transmission of the positioning signal and improve the positioning accuracy when performing positioning detection on the terminal.

In the embodiments of the present application, the case where the terminal and the access network device are in a non-connected state is described. When the terminal and the access network device are in a non-connected state, the access network device sends a second indication information including a second information field to the terminal. The terminal determines the active duration and/or the inactive duration according to the wake-up time of the terminal with the DRX configuration that is indicated by the second information field, and can perform transmission of the positioning signal in at least one of the active duration and the inactive duration. The situation that the terminal can only receive the positioning signal in the active duration is avoided. On the basis of maintaining the positioning signal transmission advantage corresponding to the discontinuous reception, the paging occasion monitoring situation associated with the non-connected state is used to flexibly determine the active duration and/or the inactive duration, reduce the delay of the positioning signal, and improve the positioning accuracy.

In an optional embodiment, when the terminal and the access network device are in a non-connected state, a determination process of the active duration and the inactive duration is as follows.

### (I). In a non-connected state, the active duration is determined.

3.1 The time resource corresponding to the first PO is determined as the active duration.

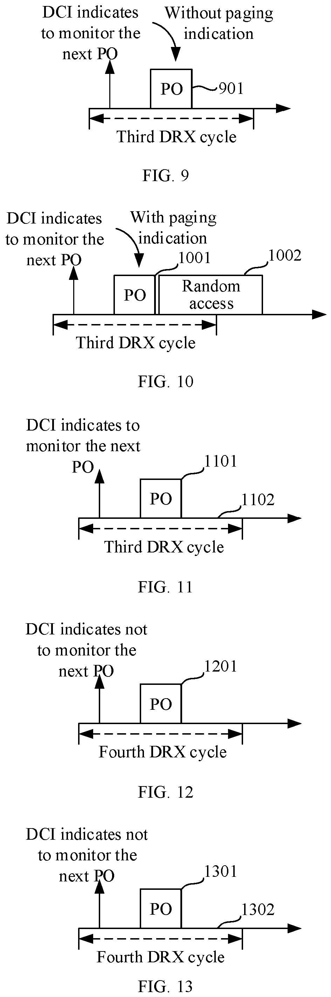

Illustratively, as shown in FIG. 9, during the third DRX cycle, the terminal monitors the first PO in the third DRX cycle as indicated by the second information field, and determines the time resource corresponding to the monitored paging occasion as the active duration, that is, determines the time resource corresponding to the first PO area 901 in FIG. 9 as the active duration.

In some embodiments, there is no paging indication in the time resource corresponding to the first PO area 901. For example: in the time resource corresponding to the first PO area 901 in FIG. 9, the terminal does not receive the paging indication.

Optionally, the time resource corresponding to the monitored paging occasion is determined as the active duration, that is, the time resource corresponding to the PO area 901 in FIG. 9 is determined as an instance of the active duration.

3.2 The random access time resource corresponding to the first PO is determined as the active duration.

Illustratively, as shown in FIG. 10, during the third DRX cycle, the terminal monitors the first PO in the third DRX cycle as indicated by the second information field, determines the time resource corresponding to the monitored paging occasion as the active duration, and determines the random access time resource corresponding to the paging occasion as the active duration, that is, the terminal determines the time resource corresponding to the first PO 1001 in FIG. 10 as the active duration, and determines the random access time resource 1002 corresponding to the first PO 1001 as the active duration.

### (II) In a non-connected state, the inactive duration is determined.

4.1 The time resource in the third DRX cycle other than the first PO is determined as the inactive duration.

Optionally, the second information field sent by the access network device and received by the terminal indicates that the terminal monitors the first PO in the third DRX cycle, then the time resource in the third DRX cycle other than the first PO is determined as the inactive duration.

Illustratively, as shown in FIG. 11, during the third DRX cycle, the terminal monitors the first PO 1101 in the third DRX cycle according to the indication of the second information field. Then, the time resource 1102 in the third DRX cycle other than the first PO 1101 is determined as the inactive duration, that is, the time resource 1102 other than the first PO 1101 is determined as an instance of the inactive duration.

That is, for some DRX cycles, DCI indicates that the terminal monitors Paging at at least one PO time, then the inactive duration indicates the time in the DRX cycle other than at least one PO at which Paging needs to be monitored, that is: if the positioning signal time domain resource is not in the PO time at which Paging needs to be monitored in the DRX cycle, the terminal also needs to perform transmission of the positioning signal, illustratively, such as the time (time resource 1102) other than PO 1101 in FIG. 11, or the time other than the first PO 1001 and other than the random access time resource 1002 in FIG. 10.

4.2 The time resource corresponding to the second PO in the fourth DRX cycle is determined as the inactive duration.

Optionally, in the fourth DRX cycle, if a second information field sent by the access network device and received by the terminal indicates that the terminal does not monitor the second PO, the time resource corresponding to the second PO in the fourth DRX cycle is determined as the inactive duration.

Illustratively, as shown in FIG. 12, at the beginning of the fourth DRX cycle, the terminal receives the indication that the second PO 1201 is not to be monitored, then the time resource corresponding to the second PO 1201 in the fourth DRX cycle is determined as the inactive duration, that is, the time resource corresponding to the second PO 1201 is used as an instance of the inactive duration. That is, the positioning signal is sent at the second PO time, and although the terminal does not need to monitor paging at the second PO time, it needs to perform transmission of the positioning signal.

That is, for some DRX cycles, the DCI indicates that the terminal does not need to monitor Paging on any POs, then the inactive duration indicates the POs corresponding to the terminal in the DRX cycle, illustratively, the time corresponding to PO 1201 in FIG. 12. That is, the positioning signal is sent at the PO time, and the terminal does not need to monitor paging at the PO time, but needs to perform transmission of the positioning signal at the PO time.

4.3 The time domain resource in the fourth DRX cycle other than the second PO is determined as the inactive duration.

Optionally, in the fourth DRX cycle, if the second information field sent by the access network device and received by the terminal indicates that the terminal does not monitor the second PO in the fourth DRX cycle, then the time resource in the fourth DRX cycle other than the second PO is determined as the inactive duration.

Illustratively, as shown in FIG. 13, at the beginning of the fourth DRX cycle, the terminal receives an indication that the second PO 1301 is not to be monitored (i.e., the second PO 1301 in the fourth DRX cycle is not to be monitored), then the time resource 1302 in the fourth DRX cycle other than the time resource corresponding to the second PO 1301 is determined as the inactive duration, that is, the time resource 1302 other than the time resource corresponding to the second PO 1301 is determined as an instance of the inactive duration.

In some embodiments, for some DRX cycles, DCI indicates that the terminal does not need to monitor Paging on any POs, then the inactive duration indicates the time in the DRX cycle other than all PO times corresponding to the terminal, illustratively, the time 1302 other than the time corresponding to PO 1301 as shown in FIG. 13. That is, the positioning signal is sent outside the PO time, and the terminal does not need to monitor Paging outside the PO time, but needs to perform transmission of the positioning signal outside the PO time.

4.4 After determining the active duration, time in the DRX cycle other than the active duration is determined as the inactive duration.

Illustratively, as shown in FIG. 9, in the third DRX cycle, if the time resource corresponding to the first PO area 901 is determined as the active duration, the time range in the third DRX cycle other than the first PO area 901 is determined as the inactive duration.

In the embodiments of the present application, the determination of the active duration and the inactive duration according to the monitoring situation of paging occasion under the condition that the terminal and the access network device are in a non-connected state is described. When determining the active duration according to the monitored paging occasion, not only the time domain resource corresponding to the monitored paging occasion is considered, but also the following situation is considered: when the terminal monitors the paging occasion, if there is a paging indication in the paging occasion, the random access time resource position corresponding to the paging indication is determined, and the active duration is determined accordingly. When determining the inactive duration according to the monitored paging occasion, not only can the inactive duration be determined according to the monitored paging occasion, but also the following situation can be implemented: after determining the active duration, the time range in the DRX cycle other than the active duration can be determined as the inactive duration, thereby more comprehensively determining the active duration and/or the inactive duration.

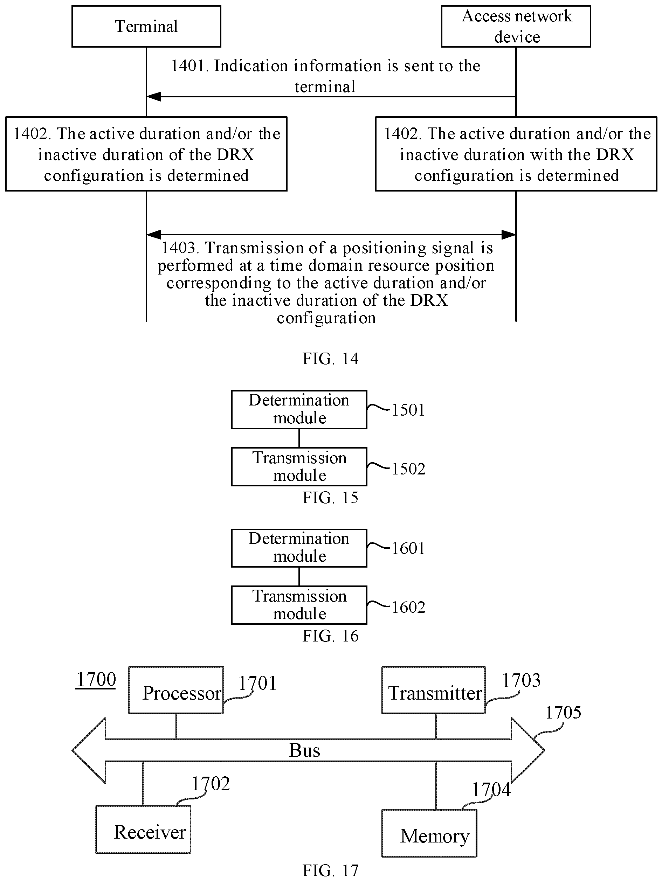

FIG. 14 is a flowchart of a positioning signal transmission method according to an exemplary embodiment of the present disclosure, and illustrates the method by taking the application of the method to the communication system including the terminal and the access network device as an example. As shown in FIG. 14, the method includes the following steps 1401 to 1403.

Step 1401: Indication information is sent to the terminal.

The indication information includes an information field, and the information field is used by the terminal to determine the active duration and/or the inactive duration of the discontinuous reception (DRX). Optionally, the terminal receives the indication information sent by the access network device.

Illustratively, the discontinuous reception (DRX) is implemented differently in a connected state than in a non-connected state.

In an optional embodiment, illustratively, the indication information received by the terminal varies according to the connection status between the terminal and the access network device.

Optionally, in response to the terminal and the access network device being in a connected state, first indication information is received. The first indication information includes a first information field, and the first information field is used for indicating the active duration and/or the inactive duration of the terminal with the DRX configuration. In some embodiments, the first indication information is implemented as DCI.

Illustratively, the first indication information includes a first information field for indicating the active duration and/or the inactive duration of the terminal with the DRX configuration when the terminal and the access network device are in a connected state.

Optionally, in response to the terminal and the access network device being in a non-connected state, receiving second indication information. The second indication information includes a second information field, and the second information field is used for indicating the active duration and/or the inactive duration of the terminal with the DRX configuration. In some embodiments, the second indication information is implemented as DCI.

In some embodiments, based on the wake-up state of the terminal with the DRX configuration on the PO indicated by the second information field, the active duration and/or the inactive duration of the terminal with the DRX configuration is determined. Illustratively, after receiving the second information field, the terminal determines the active duration and/or the inactive duration of the terminal with the DRX configuration according to whether the terminal with the DRX configuration is awakened at the time corresponding to the PO, as indicated by the second information field.

Step 1402: The active duration and/or the inactive duration with the discontinuous reception (DRX) configuration is determined.

In some embodiments, the active duration is used for indicating the time domain range in which the terminal is active; and the inactive duration is used for indicating the time domain range in which the terminal is not active. Determining the active duration and/or the inactive duration includes at least one of the following situations.

(1) Determining the active duration of DRX; (2) determining the inactive duration of DRX; (3) determining the active duration of DRX and the inactive duration of DRX.

In an optional embodiment, after the access network device sends the indication information to the terminal, in addition to the terminal confirming the active duration and/or the inactive duration, the access network device also confirms the active duration and/or the inactive duration of the DRX, that is, the access network device executes the step 1402.

The content in the step 1402 has been introduced with respect the step 201 and will not be repeated here.

Step 1403: Transmission of a positioning signal is performed at a time domain resource position corresponding to the active duration and/or the inactive duration of the DRX configuration.

Optionally, the positioning signal includes at least one of a positioning reference signal (PRS) and a sounding reference signal (SRS).

In summary, according to the difference in the determined active duration and/or inactive duration of the terminal with the DRX, the time domain resource position of the positioning signal is selectively determined, transmission of the positioning signal is performed, and the positioning accuracy of the terminal during positioning detection is improved.

FIG. 15 is a block diagram of a positioning signal transmission apparatus according to an exemplary embodiment of the present disclosure. The positioning signal transmission apparatus is applied to a terminal. As shown in FIG. 15, the apparatus includes:
a determination module 1501, configured to determine an active duration and/or an inactive duration of a discontinuous reception (DRX) configuration; and
a transmission module 1502, configured to perform transmission of a positioning signal at a time domain resource position corresponding to the active duration and/or the inactive duration of the DRX configuration.

In an optional embodiment, the determination module 1501 is configured to: receive first indication information in response to the terminal and the access network device being in a connected state, the first indication information including a first information field; and based on the first information field, determine the active duration and/or the inactive duration of the terminal with the DRX configuration.

In an optional embodiment, the first information field is used for indicating that the terminal is in a wake-up state in the duration of a first drx-on Duration Timer of a first DRX cycle; and/or, the first information field is used for indicating that the terminal is not in a wake-up state in the duration of a second drx-on Duration Timer of a second DRX cycle.

In an optional embodiment, the determination module 1501 is further configured to determine a time resource within the first drx-on Duration Timer as the active duration.

In an optional embodiment, the determination module 1501 is further configured to determine a time resource within a drx-Inactivity Timer of the first DRX cycle as the active duration.

In an optional embodiment, the determination module 1501 is further configured to: determine a time resource within a downlink retransmission timer (drx-Retransmission Timer DL) or an uplink retransmission timer (drx-Retransmission Timer UL) as the active duration; or, determine a time resource within a contention resolution timer (ra-Contention Resolution Timer) or a msgB response window (msgB-Response Window) as the active duration; or, determine the time resource on which a scheduling request (Scheduling Request) is sent on a PUCCH and is in a pending state as the active duration; or, a PDCCH indicating a new transmission addressed to the C-RNTI of the MAC entity has not been received after successful reception of a Random Access Response for the Random Access Preamble not selected by the MAC entity among the contention-based Random Access Preamble, that is, a time resource, which is after the terminal successfully receives a random access response for a first random access preamble and at which the terminal has not received a medium access control (MAC) entity indicated by a PDCCH for indicating a C-RNTI, is determined as an active duration, in which the first Random Access Preamble is not selected by the media access control control element (MAC CE) from contention-based random access preambles.

In an optional embodiment, the determination module 1501 is further configured to determine the time resource within the second drx-on Duration Timer as the inactive duration.

In an optional embodiment, the determination module 1501 is further configured to determine a time resource other than the active duration as the inactive duration.

In an optional embodiment, the determination module 1501 is further configured to: receive second indication information in response to the terminal and the access network device being in a non-connected state, the second indication information including a second information field; and based on the second information field, determine the active duration and/or the inactive duration of the terminal with the DRX configuration.

In an optional embodiment, the second information field is used for indicating that the terminal is in a wake-up state on the first PO in the third DRX cycle; and/or, the second information field is used for indicating that the terminal is not in a wake-up state on the second PO in the fourth DRX cycle.

In an optional embodiment, the determination module 1501 is further configured to determine a time resource corresponding to the first PO as the active duration.

In an optional embodiment, the determination module 1501 is further configured to determine a random access time resource corresponding to the first PO as the active duration.

In an optional embodiment, the determination module 1501 is further configured to: determine a time resource in the third DRX cycle other than the first PO as the inactive duration; or, determine the time resource corresponding to the second PO in the fourth DRX cycle as the inactive duration; or, determine the time resource in the fourth DRX cycle other than the second PO as the inactive duration.

In an optional embodiment, a time resource other than the active duration is determined as the inactive duration.

In an optional embodiment, the transmission module 1502 is further configured to: perform transmission of the positioning signal at a time domain resource position corresponding to the active duration; or, perform transmission of the positioning signal at a time domain resource position corresponding to the inactive duration; or, perform transmission of the positioning signal at a time domain resource position corresponding to the active duration and a time domain resource position corresponding to the inactive duration.

In an optional embodiment, the transmission module 1502 is further configured to: send the positioning signal on the time domain resource corresponding to the active duration and/or the inactive duration of the DRX; or, receive the positioning signal on the time domain resource corresponding to the active duration and/or the inactive duration of the DRX.

In an optional embodiment, the transmission module 1502 is further configured to send a positioning report.

In an optional embodiment, the positioning signal includes a positioning reference signal (PRS); or, the positioning signal includes a sounding reference signal (SRS).

FIG. 16 is a block diagram of a positioning signal transmission apparatus according to an exemplary embodiment of the present disclosure. The positioning signal transmission apparatus is applied to an access network device. As shown in FIG. 16, the apparatus includes:
a determination module 1601, configured to determine an active duration and/or an inactive duration of a discontinuous reception (DRX) configuration; and
a transmission module 1602, configured to perform transmission of a positioning signal at a time domain resource position corresponding to the active duration and/or the inactive duration of the DRX configuration.

In an optional embodiment, the determination module 1601 is configured to: send a first indication information to the terminal in response to the terminal and the access network device being in a connected state, the first indication information including a first information field; and based on the first information field, determine the active duration and/or the inactive duration of the terminal with the DRX configuration.

In an optional embodiment, the first information field is used for indicating that the terminal is in a wake-up state in the duration of a first drx-on Duration Timer of a first DRX cycle; and/or, the first information field is used for indicating that the terminal is not in a wake-up state in the duration of the first drx-on Duration Timer of the second DRX cycle.

In an optional embodiment, the determination module 1601 is further configured to determine a time resource within the first drx-on Duration Timer as the active duration.

In an optional embodiment, the determination module 1601 is further configured to determine a time resource within a drx-Inactivity Timer of the first DRX cycle as the active duration.

In an optional embodiment, the determination module 1601 is further configured to: determine a time resource within the drx-Retransmission Timer DL or the drx-Retransmission Timer UL as the active duration; or, determine a time resource within the ra-Contention Resolution Timer or the msgB-Response Window as the active duration; or, determine the time resource on which the Scheduling Request is sent on the PUCCH and is in a pending state as the active duration; or, a PDCCH indicating a new transmission addressed to the C-RNTI of the MAC entity has not been received after successful reception of a Random Access Response for the Random Access Preamble not selected by the MAC entity among the contention-based Random Access Preamble, that is, a time resource, which is after the terminal successfully receives a random access response for a first random access preamble and at which the terminal has not received a medium access control (MAC) entity indicated by a PDCCH for indicating a C-RNTI, is determined as the active duration, in which the first Random Access Preamble is not selected by the media access control control element (MAC CE) from contention-based random access preambles.

In an optional embodiment, the determination module 1601 is further configured to determine a time resource within the second drx-on Duration Timer as the inactive duration.

In an optional embodiment, the determination module 1601 is further configured to determine a time resource other than the active duration as the inactive duration.

In an optional embodiment, the determination module 1601 is further configured to: send a second indication information to the terminal in response to the terminal and the access network device being in a non-connected state, the second indication information including a second information field; and based on the second information field, determine the active duration and/or the inactive duration of the terminal with the DRX configuration.

In an optional embodiment, the second information field is used for indicating that the terminal is in a wake-up state on the first PO in the third DRX cycle; and/or, the second information field is used for indicating that the terminal is not in a wake-up state on the second PO in the fourth DRX cycle.

In an optional embodiment, the determination module 1601 is further configured to determine a time resource corresponding to the first PO as the active duration.

In an optional embodiment, the determination module 1601 is further configured to determine a random access time resource corresponding to the first PO as the active duration.

In an optional embodiment, the determination module 1601 is further configured to: determine a time resource in the third DRX cycle other than the first PO as the inactive duration; or, determine a time resource corresponding to the second PO in the fourth DRX cycle as the inactive duration; or, determine a time resource in the fourth DRX cycle other than the second PO as the inactive duration.

In an optional embodiment, the determination module 1601 is further configured to determine a time resource other than the active duration as the inactive duration.

In an optional embodiment, the transmission module 1602 is further configured to: perform transmission of the positioning signal at a time domain resource position corresponding to the active duration; or, perform transmission of the positioning signal at a time domain resource position corresponding to the inactive duration; or, perform transmission of the positioning signal at a time domain resource position corresponding to the active duration and a time domain resource position corresponding to the inactive duration.

In an optional embodiment, the transmission module 1602 is further configured to send the positioning signal on the time domain resource corresponding to the active duration and/or the inactive duration of the DRX; or, receive the positioning signal on the time domain resource corresponding to the active duration and/or the inactive duration of the DRX.

In an optional embodiment, the transmission module 1602 is further configured to send a positioning report.

In an optional embodiment, the positioning signal includes a positioning reference signal (PRS); or, the positioning signal includes a sounding reference signal (SRS).

In summary, by means of the above apparatuses, according to the difference in the determined active duration and/or inactive duration of the DRX, the time domain resource position of the positioning signal is selectively determined, and transmission of the positioning signal is performed, and the positioning accuracy when performing positioning detection on the terminal is improved.

It should be noted that the positioning signal transmission apparatuses provided in the above embodiments are merely illustrated exemplarily with a division into various functional modules. In actual applications, the above functions can be assigned to different functional modules as needed, that is, the internal structure of the apparatus is divided into different functional modules to complete all or part of the functions described above. In addition, the positioning signal transmission apparatuses provided in the above embodiments and the embodiments of the positioning signal transmission methods belong to the same concept. For the specific implementation process of the positioning signal transmission apparatuses, references may be made to the method embodiments, and detailed descriptions thereof are omitted herein.

FIG. 17 shows a schematic structural diagram of a communication device 1700 (terminal or access network device) according to an exemplary embodiment of the present disclosure. The terminal includes: a processor 1701, a receiver 1702, a transmitter 1703, a memory 1704 and a bus 1705.

The processor 1701 includes one or more processing cores. The proces sor 1701 executes various functional applications and information processing by running software programs and modules.

The receiver 1702 and the transmitter 1703 may be implemented as one communication component, which may be one piece of communication chip.

The memory 1704 is connected to the processor 1701 via a bus 1705.

The memory 1704 may be configured to store at least one instruction, and the processor 1701 is configured to execute the at least one instruction to implement each step in the aforementioned method embodiments.

In addition, memory 1704 can be implemented by any type of volatile or non-volatile storage device or a combination thereof. Volatile or non-volatile storage devices include but are not limited to: magnetic disk or optical disc, electrically erasable programmable read-only memory (EEPROM), erasable programmable read-only memory (EPROM), static random access memory (SRAM), read-only memory (ROM), magnetic storage, flash memory, and programmable read-only memory (PROM).

An exemplary embodiment of the present disclosure further provides a non-transitory computer-readable storage medium. Instructions in the non-transitory computer-readable storage medium, when being executed by a processor of a terminal, enable the terminal to execute the above-mentioned positioning signal transmission method.

An exemplary embodiment of the present disclosure further provides a positioning signal transmission system, the system including: a terminal and an access network device; in which
the terminal includes a positioning signal transmission apparatus provided by the embodiment shown in FIG. 15;
the access network device includes a positioning signal transmission apparatus provided by the embodiment shown in FIG. 16.

An exemplary embodiment of the present disclosure also provides a computer-readable storage medium, in which at least one instruction, at least one program, a code set or an instruction set is stored. The at least one instruction, the at least one program, the code set or the instruction set, when being executed by the processor, implements the steps performed by the terminal in the positioning signal transmission method provided in the above-mentioned method embodiments.

The term "multiple" used herein refers to two or more. The term "and/or" used herein merely refers to an association relationship between objects to be associated and means there are three relationships. For example, A and/or B may represent: only A exists, both A and B exist, and only B exists. The symbol "/" as used herein generally represents there is a "or" relationship between the objects to be associated.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A positioning signal transmission method, performed by a terminal, and comprising:
determining an active duration and/or an inactive duration of a discontinuous reception DRX configuration;
performing transmission of a positioning signal at a time domain resource position corresponding to the active duration and/or the inactive duration of the DRX configuration.

2. The method according to claim 1, wherein the determining the active duration and/or the inactive duration of the DRX configuration comprises:
in response to the terminal and an access network device being in a connected state, receiving first indication information, wherein the first indication information comprises a first information field; and
determining the active duration and/or the inactive duration of the terminal with the DRX configuration based on the first information field.

3. The method according to claim 2, wherein
the first information field is used for indicating that the terminal is in a wake-up state during a first drx-on Duration Timer of a first DRX cycle; and/or,
the first information field is used for indicating that the terminal is not in a wake-up state during a second drx-on Duration Timer of a second DRX cycle.

4. The method according to claim 3, wherein the determining the active duration and/or the inactive duration of the terminal with the DRX configuration based on the first information field comprises:
determining a time resource within the first drx-on Duration Timer as the active duration.

5. The method according to claim 4, further comprising:
determining a time resource within a drx-Inactivity Timer of the first DRX cycle as the active duration.

6. The method according to claim 3, further comprising:
determining a time resource within a drx-Retransmission Timer DL or a drx-Retransmission Timer UL as the active duration; or,
determining a time resource within an ra-Contention Resolution Timer or a msgB-Response Window as the active duration; or,
determining a time resource at which a scheduling request is sent on a physical uplink control channel PUCCH and is in a pending state as the active duration; or,
determining a time resource, which is after the terminal successfully receives a random access response for a first random access preamble and at which the terminal has not received a Medium Access Control MAC entity indicated by a physical downlink control channel PDCCH for indicating a C-RNTI, as the active duration, wherein the first random access preamble is not selected by a media access control control element MAC CE from contention-based random access preambles.

7. The method according to claim 3, wherein the determining the active duration and/or the inactive duration of the terminal with the DRX configuration based on the first information field comprises:
determining a time resource within the second drx-on Duration Timer as the inactive duration.

8. The method according to claim 3, further comprising:
determining a time resource other than the active duration as the inactive duration.

9. The method according to claim 1, wherein the determining the active duration and/or the inactive duration of the DRX configuration comprises:
in response to the terminal and the access network device being in a non-connected state, receiving second indication information, wherein the second indication information comprises a second information field; and
determining the active duration and/or the inactive duration of the terminal with the DRX configuration based on the second information field.

10. The method according to claim 9, wherein
the second information field is used for indicating that the terminal is in a wake-up state on a first paging occasion PO in a third DRX cycle; and/or,
the second information field is used for indicating that the terminal is not in a wake-up state on a second PO in a fourth DRX cycle.

11. The method according to claim 10, wherein the determining the active duration and/or the inactive duration of the terminal with the DRX configuration based on the second information field comprises:
determining a time resource corresponding to the first PO as the active duration.

12. The method according to claim 11, further comprising:
determining a random access time resource corresponding to the first PO as the active duration.

13. The method according to claim 10, wherein the determining the active duration and/or the inactive duration of the terminal with the DRX configuration based on the second information field comprises:
determining a time resource in the third DRX cycle that is other than the first PO as the inactive duration; or,
determining a time resource corresponding to a second PO in the fourth DRX cycle as the inactive duration; or,
determining a time resource in the fourth DRX cycle that is other than the second PO as the inactive duration.

14. The method according to claim 10, further comprising:
determining a time resource other than the active duration as the inactive duration.

15. The method according to any one of claims 1 to 14, further comprising:
performing transmission of the positioning signal at a time domain resource position corresponding to the active duration; or,
performing transmission of the positioning signal at a time domain resource position corresponding to the inactive duration; or,
performing transmission of the positioning signal at a time domain resource position corresponding to the active duration and a time domain resource position corresponding to the inactive duration.

16. The method according to any one of claims 1 to 14, wherein the performing transmission of a positioning signal at a time domain resource position corresponding to the active duration and/or the inactive duration of the DRX configuration comprises:
sending the positioning signal at the time domain resource position corresponding to the active duration and/or the inactive duration of the DRX configuration; or,
receiving the positioning signal at the time domain resource position corresponding to the active duration and/or the inactive duration of the DRX configuration.

17. The method according to claim 16, wherein after the receiving the positioning signal at the time domain resource position corresponding to the active duration and/or the inactive duration of the DRX configuration, the method further comprises:
sending a positioning report.

18. The method according to any one of claims 1 to 14, wherein,
the positioning signal comprises a positioning reference signal PRS; or,
the positioning signal comprises a sounding reference signal SRS.

19. A positioning signal transmission method, performed by an access network device, and comprising:
determining an active duration and/or an inactive duration of a discontinuous reception DRX configuration; and
performing transmission of a positioning signal at a time domain resource position corresponding to the active duration and/or the inactive duration of the DRX configuration.

20. The method according to claim 19, wherein the determining the active duration and/or the inactive duration of the DRX configuration comprises:
in response to a terminal and the access network device being in a connected state, sending first indication information to the terminal, wherein the first indication information comprises a first information field; and
determining the active duration and/or the inactive duration of the terminal with the DRX configuration based on the first information field.

21. The method according to claim 20, wherein
the first information field is used for indicating that the terminal is in a wake-up state during a first drx-on Duration Timer of a first DRX cycle; and/or,
the first information field is used for indicating that the terminal is not in a wake-up state during a second drx-on Duration Timer of a second DRX cycle.

22. The method according to claim 21, wherein the determining the active duration and/or the inactive duration of the terminal with the DRX configuration based on the first information field comprises:
determining a time resource within the first drx-on Duration Timer as the active duration.

23. The method according to claim 22, further comprising:
determining a time resource within a drx-Inactivity Timer of the first DRX cycle as the active duration.

24. The method according to claim 21, further comprising:
determining a time resource within a drx-Retransmission Timer DL or a drx-Retransmission Timer UL as the active duration; or,
determining a time resource within an ra-Contention Resolution Timer or a msgB-Response Window as the active duration; or,
determining a time resource at which a scheduling request is sent on a PUCCH and is in a pending state as the active duration; or,
determining a time resource, which is after the terminal successfully receives a random access response for a first random access preamble and at which the terminal has not received an MAC entity indicated by a PDCCH for indicating a C-RNTI, as the active duration, wherein the first random access preamble is not selected by an MAC CE from contention-based random access preambles.

25. The method according to claim 21, wherein the determining the active duration and/or the inactive duration of the terminal with the DRX configuration based on the first information field comprises:
determining a time resource within the second drx-on Duration Timer as the inactive duration.

26. The method according to claim 21, further comprising:
determining a time resource other than the active duration as the inactive duration.

27. The method according to claim 19, wherein the determining the active duration and/or the inactive duration of the DRX configuration comprises:
in response to the terminal and the access network device being in a non-connected state, sending second indication information to the terminal, wherein the second indication information comprises a second information field; and
determining the active duration and/or the inactive duration of the terminal with the DRX configuration based on the second information field.

28. The method according to claim 27, wherein
the second information field is used for indicating that the terminal is in a wake-up state on a first PO in a third DRX cycle; and/or,
the second information field is used for indicating that the terminal is not in a wake-up state on a second PO in a fourth DRX cycle.

29. The method according to claim 28, wherein the determining the active duration and/or the inactive duration of the terminal with the DRX configuration based on the second information field comprises:
determining a time resource corresponding to the first PO as the active duration.

30. The method according to claim 29, further comprising:
determining a random access time resource corresponding to the first PO as the active duration.

31. The method according to claim 28, wherein determining the inactive duration based on a monitoring paging position of the terminal with the DRX configuration indicated by the second information field comprises:
determining a time resource in the third DRX cycle that is other than the first PO as the inactive duration; or,
determining a time resource corresponding to a second PO in the fourth DRX cycle as the inactive duration; or,
determining a time resource in the fourth DRX cycle that is other than the second PO as the inactive duration.

32. The method according to claim 28, further comprising:
determining a time resource other than the active duration as the inactive duration.

33. The method according to any one of claims 19 to 31, further comprising:
performing transmission of the positioning signal at a time domain resource position corresponding to the active duration; or,
performing transmission of the positioning signal at a time domain resource position corresponding to the inactive duration; or,
performing transmission of a positioning signal at a time domain resource position corresponding to the active duration and a time domain resource position corresponding to the inactive duration.

34. The method according to any one of claims 19 to 31, wherein the performing transmission of a positioning signal at a time domain resource position corresponding to the active duration and/or the inactive duration of the DRX configuration comprises:
sending the positioning signal at the time domain resource position corresponding to the active duration and/or the inactive duration of the DRX configuration; or,
receiving the positioning signal at the time domain resource position corresponding to the active duration and/or the inactive duration of the DRX configuration.

35. The method according to claim 34, wherein after the receiving the positioning signal at the time domain resource position corresponding to the active duration and/or the inactive duration of the DRX configuration, the method further comprises:
sending a positioning report.

36. The method according to any one of claims 19 to 31, wherein,
the positioning signal comprises a positioning reference signal PRS; or,
the positioning signal comprises a sounding reference signal SRS.

37. A positioning signal transmission apparatus, applied to a terminal, and comprising:
a determination module, configured to determine an active duration and/or an inactive duration of a discontinuous reception DRX configuration; and
a transmission module, configured to perform transmission of a positioning signal at a time domain resource position corresponding to the active duration and/or the inactive duration of the DRX configuration.

38. A positioning signal transmission apparatus, applied to an access network device, and comprising:
a determination module, configured to determine an active duration and/or an inactive duration of a discontinuous reception DRX configuration; and
a transmission module, configured to perform transmission of a positioning signal at a time domain resource position corresponding to the active duration and/or the inactive duration of the DRX configuration.

39. A terminal, comprising:
a processor; and a transceiver connected to the processor;
wherein the processor is configured to execute executable instructions to implement the positioning signal transmission method according to any one of claims 1 to 18.

40. A network device, comprising:
a processor; and a transceiver connected to the processor;
wherein the processor is configured to execute executable instructions to implement the positioning signal transmission method according to any one of claims 19 to 36.

41. A computer-readable storage medium storing at least one instruction, at least one program, a code set or an instruction set, wherein the at least one instruction, the at least one program, the code set or the instruction set, when being executed by a processor, implements the positioning signal transmission method according to any one of claims 1 to 36.
